# EUROPÄISCHE PATENTSCHRIFT

(11) **EP 0 468 277 B1**
(45) Veröffentlichungstag und Bekanntmachung des Hinweises auf die Patenterteilung: **09.04.1997**
(21) Anmeldenummer: 91111467.6
(22) Anmeldetag: 10.07.1991
(51) Int. Cl.: B23K 35/30, B23K 9/04, C03B 40/00

(54) **Verfahren zum elektrischen Schutzgasschweissen auf Kanten einer Glasform**
Method of electrical shielded arc welding on edges of a glasform
Procédé de soudage à l'arc en atmosphère inerte sur les bords d'un moule en verre

(30) Priorität: 23.07.1990 DE 4023404
(43) Veröffentlichungstag der Anmeldung: 29.01.1992
(73) Patentinhaber: CASTOLIN S.A., CH-1025 Lausanne - St. Sulpice (CH)
(72) Erfinder: Seifahrt, Horst, Dr., CH-1092 Belmont s/Lausanne (CH); Steine, Hans-Theo, CH-1053 Cugy (CH); Noel, Léon, F-78220 Viroflang (FR)
(74) Vertreter: Hiebsch, Gerhard F., Dipl.-Ing.

(56) Entgegenhaltungen:
- EP-A- 0 095 668
- WO-A-86/06757
- DE-A- 3 018 007
- FR-A- 2 285 956
- GB-A- 2 130 242

## Beschreibung

Die Erfindung betrifft ein Verfahren zum elektrischen Schutzgasschweißen auf Kanten einer Glasform.

Zum Beschichten oder Wiederherstellen von Kantenbereichen an Glasformen werden autogene Auftragsverfahren für pulverförmige Beschichtungswerkstoffe eingesetzt. Versuche, diese Verfahren zu automatisieren, um ausreichende Konstanz bei der Serienfertigung von Glasformen zu erzielen, haben sich bis heute nicht bewährt.

So wollte man diesem Problem mit einer -- einen übertragenen Lichtbogen aufweisenden -- Plasmabeschichtungsanlage begegnen, was allerdings nur zu Teilerfolgen führte.

Bei allen bisher für die Beschichtung von Glasformen verwendeten Verfahren wird loses Metallpulver als Beschichtungswerkstoff eingesetzt, der allenfalls beim Auftragen von Hand gute Ergebnisse anzubieten in der Lage sein kann.

Die EP-A-0095 668 beschreibt beispielhaft eine Mischung aus zwei pulverförmigen Komponenten auf Ni-Basis als homogenen Werkstoff.

In Kenntnis dieses Standes der Technik hat sich der Erfinder das Ziel gesetzt, das Behandeln von Kanten an Glasformen bei Serienfertigung zu automatisieren sowie den Auftrag zu vergleichmäßigen, um das Ausbringen an Produkten sowie die Wirtschaftlichkeit der Fertigung zu erhöhen.

Die während der Flaschenproduktion durch Bruchglas entstehenden Kantenausbrüche an Hohlglasformen sollen ohne Beschädigung der polierten Formeninnenflächen repariert werden; die bis heute verwendeten Pulverauftragsverfahren eignen sich für diese Arbeiten wegen der großen Besprühungszone nicht.

Zur Lösung dieser Aufgabe führt ein Verfahren nach Patentanspruch 1, die Unteransprüche erfassen günstige Ausgestaltungen.

Erfindungsgemäß wird zum Auftragsschweißen auf einer Kante einer Glasform eine abschmelzbare Elektrode eingesetzt aus einer pulverförmigen sowie einer dieser außenseitig zugeordneten und querschnittlich gekrümmten strangartigen Komponente -- beide auf Nickelbasis -- wobei das Werkstoffgemisch folgende Zusammensetzung aufweist: Chrom von höchstens 21 Gew.-% sowie mit einer Gesamtmenge von bis zu 21 Gew.-% der Elemente B, Si, Fe -- gegebenenfalls noch Mo und/oder W --, wobei die Mindestgehalte für Chrom 0,1 Gew.-%, Eisen 0,1 Gew-%, Bor 0,2 Gew.-% und Silizium 0,2 Gew.-% sind.

Beim Auftragsschweißen nach dem erfindungsgemäßen Verfahren aus den zwei metallischen Komponenten wird also ein Werkstoffgemisch mit Nickel und bis zu 21 Gew.-% Chrom erschmolzen, das eine Gesamtmenge von bis zu 21 % Gew.-% der Elemente Bor, Silizium und Eisen enthält. Bei diesen handelt es sich um solche, die immer in der zur Beschichtung vorhandenen Legierung enthalten sind, bei gegebenenfalls noch vorhandenem Molybdän sowie Wolfram um nur in bestimmten Fällen zugesetzte.

Nach einem weiteren Merkmal der Erfindung ist die strangförmige Komponente bevorzugt eine querschnittlich gekrümmte Folie oder Platte, welche die pulverförmige Komponente umgibt und der Auftragsstelle zuzuführen hilft.

Im Rahmen der Erfindung liegt vor allem ein Verfahren, bei dem ein Werkstoffgemisch eines Chromgehaltes von 0,1 bis 19,9 Gew.-% -- vorzugsweise 0,5 bis 14,9 Gew.-% -- und/oder eines Eisengehaltes von 0,1 bis 8 Gew.-%, vorzugsweise 0,5 bis 5,9 Gew.-%, eingesetzt wird.

Nach einem weiteren Merkmal der Erfindung kann der Borgehalt zwischen 0 bis 5 Gew.-%, vorzugsweise 0,2 bis 3,6 Gew.-%, liegen, der Siliziumgehalt bei 0,2 bis 8 Gew.-%, vorzugsweise 0,3 bis 4 Gew.-%.

Bei einer anderen Ausführung des erfindungsgemäßen Verfahrens wird ein Werkstoffgemisch mit Molybdän bis zu 9,9 Gew.-%, vorzugsweise unter 5 Gew.-% bzw. Wolfram bis zu 8 Gew.-%, vorzugsweise unter 3,9 Gew.-%, eingesetzt.

Als günstig hat es sich erwiesen, auf die Glasform den strangförmigen Werkstoff mit einer Füllung aus einem oder mehreren Metallpulver/n durch Metall-Inertgas-Schweißen aufzutragen.

Zum Sphärodisieren sind dem Werkstoffgemisch bevorzugt Cer-, Magnesium-, Barium- oder Aluminiumanteile jeweils bis zu maximal 1 Gew.-% zugeordnet.

## Patentansprüche

1. Verfahren zum elektrischen Schutzgasschweißen auf Kanten einer Glasform durch Abschmelzen einer Elektrode aus einer pulverförmigen sowie einer dieser außenseitig zugeordneten und querschnittlich gekrümmten strangartigen Komponente, beide auf Nickelbasis, wobei das Werkstoffgemisch folgende Zusammensetzung aufweist: Chrom von höchstens 21 Gew.-% sowie B,Si,Fe, gegebenenfalls Mo und/oder W, in einer Gesamtmenge von bis zu 21 Gew.-%, wobei die Mindestgehalte für Chrom 0,1 Gew.-%, Eisen 0,1 Gew-%, Bor 0,2 Gew.-% und Silizium 0,2 Gew.-%, sind.

2. Verfahren nach Anspruch 1, dadurch gekennzeichnet, daß die pulverförmige Komponente von der strangartigen Komponente in Form einer querschnittlich gekrümmten Folie oder Platte umgeben wird.

3. Verfahren nach Anspruch 1 oder 2, gekennzeichnet durch eine verdüstes Metallpulver enthaltende strangförmige Komponente.

4. Verfahren nach einem der Ansprüche 1-3, dadurch gekennzeichnet, daß die Komponenten durch Metall-Inertgas-Schweißen aufgetragen werden.

5. Verfahren nach einem der Ansprüche 1 bis 4, gekennzeichnet durch ein Werkstoffgemisch mit einem Chromgehalt von 0,1 bis 19,9 Gew.-%.

6. Verfahren nach Anspruch 5, gekennzeichnet durch ein Werkstoffgemisch mit einem Chromgehalt von 0,5 bis 14,9 Gew.-%.

7. Verfahren nach einem der Ansprüche 1 bis 6, gekennzeichnet durch ein Werkstoffgemisch mit einem Eisengehalt von 0,1 bis 8 Gew.-%.

8. Verfahren nach Anspruch 7, gekennzeichnet durch ein Werkstoffgemisch mit einem Eisengehalt von 0,5 bis 5,9 Gew.-%.

9. Verfahren nach einem der Ansprüche 1 bis 8, gekennzeichnet durch ein Werkstoffgemisch mit einem Borgehalt bis 5 Gew.-%.

10. Verfahren nach Anspruch 9, gekennzeichnet durch ein Werkstoffgemisch mit einem Borgehalt von 0,2 bis 3,6 Gew.-%^{.}

11. Verfahren nach einem der Ansprüche 1 bis 10, gekennzeichnet durch ein Werkstoffgemisch mit einem Siliziumgehalt von 0,2 bis 8 Gew.-%.

12. Verfahren nach Anspruch 11, gekennzeichnet durch ein Werkstoffgemisch mit einem Siliziumgehalt von 0,3 bis 4 Gew.-%.

13. Verfahren nach Anspruch 1, gekennzeichnet durch ein Werkstoffgemisch mit einem Molybdängehalt bis zu 9,9 Gew.-%.

14. Verfahren nach Anspruch 1 oder 13, gekennzeichnet durch ein Werkstoffgemisch mit einem Molybdängehalt unter 5 Gew.-%.

15. Verfahren nach Anspruch 1, gekennzeichnet durch ein Werkstoffgemisch mit einem Wolframgehalt bis zu 8 Gew.-%.

16. Verfahren nach Anspruch 1 oder 15, gekennzeichnet durch ein Werkstoffgemisch mit einem Wolframgehalt unter 3,9 Gew.-%.

17. Verfahren nach einem der Ansprüche 1 bis 16, gekennzeichnet durch ein Werkstoffgemisch mit einem Cer-, Magnesium-, Barium- oder Aluminiumanteil jeweils bis höchstens 1 Gew.-% zum Sphärodisieren der Elemente oder deren Mischung.

## Claims

1. Process for shielded arc electric welding on the edges of a glass mould by melting an electrode consisting of a pulverulent component and a strand-like component with an arcuate cross section associated with the outer surface thereof, both nickel-based, the material mixture having the following composition: chromium no more than 21 % by weight, as well as B, Si, Fe and optionally Mo and/or W in an overall quantity of up to 21 % by weight, the minimum quantities being chromium 0.1 % by weight, iron 0.1 % by weight, boron 0.2 % by weight and silicon 0.2 % by weight.

2. Process according to claim 1, characterised in that the pulverulent component is surrounded by the strand-like component in the form of a foil or plate with an arcuate cross section.

3. Process according to claim 1 or claim 2, characterised by a strand-like component containing atomised metal powder.

4. Process according to one of claims 1-3, characterised in that the components are applied by metal inert-gas welding.

5. Process according to one of claims 1 to 4, characterised by a material mixture with a chromium content of 0.1 to 19.9 % by weight.

6. Process according to claim 5, characterised by a material mixture with a chromium content of 0.5 to 14.9 % by weight.

7. Process according to one of claims 1 to 6, characterised by a material mixture with an iron content of 0.1 to 8 % by weight.

8. Process according to claim 7, characterised by a material mixture with an iron content of 0.5 to 5.9 % by weight.

9. Process according to one of claims 1 to 8, characterised by a material mixture with a boron content of up to 5 % by weight.

10. Process according to claim 9, characterised by a material mixture with a boron content of 0.2 to 3.6 % by weight.

11. Process according to one of claims 1 to 10, characterised by a material mixture with a silicon content of 0.2 to 8 % by weight.

12. Process according to claim 11, characterised by a material mixture with a silicon content of 0.3 to 4 % by weight.

13. Process according to claim 1, characterised by a material mixture with a molybdenum content of up to 9.9 % by weight.

14. Process according to claim 1 or claim 13, characterised by a material mixture with a molybdenum content of less than 5 % by weight.

15. Process according to claim 1, characterised by a material mixture with a tungsten content of up to 8 % by weight.

16. Process according to claim 1 or claim 15, characterised by a material mixture with a tungsten content of less than 3.9 % by weight.

17. Process according to one of claims 1 to 16, characterised by a material mixture with a cerium, magnesium, barium or aluminium content of up to no more than 1 % by weight for spheroidising the elements or the mixture thereof.

## Revendications

1. Procédé de soudage électrique au gaz de protection sur les arêtes d'un moule à verre par fusion d'une électrode réalisée à partir d'un composant pulvérulent ainsi que d'un composant en forme de barre disposé du côté extérieur et à section transversale courbée, tous les deux à base de nickel, dans lequel le mélange de matériaux présente la composition suivante : chrome au plus 21 % en poids, ainsi que B, Si, Fe, le cas échéant Mo et/ou W, dans une quantité totale d'au plus 21 % en poids, dans lequel les teneurs minimales sont pour le chrome de 0,1 % en poids, pour le fer de 0,1 % en poids, pour le bore de 0,2 % en poids, et pour le silicium de 0,2 % en poids.

2. Procédé selon la revendication 1, caractérisé en ce que les composants pulvérulents sont entourés par les composants en forme de barre sous la forme d'une feuille ou d'une plaque à section transversale recourbée.

3. Procédé selon la revendication 1 ou 2, caractérisé par un composant en forme de barre contenant de la poudre métallique pulvérisée.

4. Procédé selon l'une des revendications 1 à 3, caractérisé en ce que les composants sont appliqués par soudage métal-gaz inerte.

5. Procédé selon l'une des revendications 1 à 4, caractérisé par un mélange de matériaux avec une teneur en chrome de 0,1 à 19,9 % en poids.

6. Procédé selon la revendication 5, caractérisé par un mélange de matériaux avec une teneur en chrome de 0,5 à 14,9 % en poids.

7. Procédé selon l'une des revendications 1 à 6, caractérisé par un mélange de matériaux avec une teneur en fer de 0,1 à 8 % en poids.

8. Procédé selon la revendication 7, caractérisé par un mélange de matériaux avec une teneur en fer de 0,5 à 5,9 % en poids.

9. Procédé selon l'une des revendications 1 à 8, caractérisé par un mélange de matériaux avec une teneur en bore d'au plus 5 % en poids.

10. Procédé selon la revendication 9, caractérisé par un mélange de matériaux avec une teneur en bore de 0,2 à 3,6 % en poids.

11. Procédé selon l'une des revendications 1 à 10, caractérisé par un mélange de matériaux avec une teneur en silicium de 0,2 à 8 % en poids.

12. Procédé selon la revendication 11, caractérisé par un mélange de matériaux avec une teneur en silicium de 0,3 à 4 % en poids.

13. Procédé selon la revendication 1, caractérisé par un mélange de matériaux avec une teneur en molybdène d'au plus 9,9 % en poids.

14. Procédé selon la revendication 1 ou 13, caractérisé par un mélange de matériaux avec une teneur en molybdène inférieure à 5 % en poids.

15. Procédé selon la revendication 1, caractérisé par un mélange de matériaux avec une teneur en tungstène d'au plus 8 % en poids.

16. Procédé selon la revendication 1 ou 15, caractérisé par un mélange de matériaux avec une teneur en tungstène inférieure à 3,9 % en poids.

17. Procédé selon l'une des revendications 1 à 16, caractérisé par un mélange de matériaux avec une teneur en cérium, en magnésium, en baryum ou en aluminium chaque fois d'au plus 1 % en poids afin d'obtenir une mise en forme sphéroïdale des éléments ou bien leur mélange.
